# EUROPEAN PATENT SPECIFICATION

(11) **EP 1 995 891 B1**
(45) Date of publication and mention of the grant of the patent: **05.08.2009**
(21) Application number: 07010070.6
(22) Date of filing: 21.05.2007
(51) Int. Cl.: H04B 7/26

(54) **Busy signal transceiver**
Besetztsignal-Sende-Empfangsgerät
Émetteur-récepteur de signal occupé

(43) Date of publication of application: 26.11.2008
(73) Proprietor: NTT DoCoMo, Inc., Chiyoda-ku Tokyo 100-6150 (JP)
(72) Inventor: Abu-Alhiga, Rami, 28759 Bremen (DE); Auer, Gunther, 80339 München (DE); Haas, Harald, 28755 Bremen (DE); Omiyi, Peter, 28759 Bremen (DE)
(74) Representative: Zinkler, Franz

(56) References cited:
- EP-A- 1 526 685
- EP-A- 1 763 268
- HAAS H ET AL: "Interference Aware Medium Access in Cellular OFDMA/TDD Networks" COMMUNICATIONS, 2006. ICC '06. IEEE INTERNATIONAL CONFERENCE ON, IEEE, PI, June 2006 (2006-06), pages 1778-1783, XP031025319 ISBN: 1-4244-0354-5
- OMIYI P E ET AL: "Improving time-slot allocation in 4th generation OFDM/TDMA TDD radio access networks with innovative channel-sensing" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 3133-3137, XP010709781 ISBN: 0-7803-8533-0

## Description

The present invention relates to the field of communication protocols, especially in communication networks utilizing TDD (TDD = Time Division Duplex).

The busy tone concept, cf. H. Haas, V. D. Nguyen, P. Omiyi, N. H. Nedev, and G. Auer, "Interference aware medium access in cellular ofdma/tdd network," in Proceedings of the International Conference on Communications ICC'06, Istanbul, Turkey: IEEE, June 11-15 2006, is a known concept. The use of reservation indicators allows for acknowledgement of data transmissions and for reservation of transmission resources. Present communication systems, as for example, LTE (LTE = Long Term Evolution), which is established as a standard by 3GPP (3GPP = Third Generation Partnership Project), utilize OFDM (OFDM = Orthogonal Frequency Division Multiplexing) in order to achieve advanced data through put rates, which, for example, range in the area of 100Mbit. Moreover, the WINNER (WINNER = Wireless World Initiative New Radio) established an OFDM-TDD system proposal. Furthermore, present and future communication systems make use of asymmetric channels, meaning data rates in the uplink and the downlink may differ significantly.

It is common to base the physical layer on time-frequency slots, which are referred to as chunks or data chunks. For example, in the TDD mode of the WINNER OFDM-TDD system, one chunk may be composed of 16 subcarriers in the frequency direction and 5 OFDM symbols in the time direction, which is equivalent to a frequency-time slot of 781.25 kHz times 108.0 µs. Therewith, a chunk defines the granularity of the WINNER system, which can be important for channel allocation, and other system level functions, cf. WINNER, "Winner II Test Scenarios and Calibration Cases Issue 1" IST-4-0277756 WINNER II deliverable D6.13.1, June, 2006.

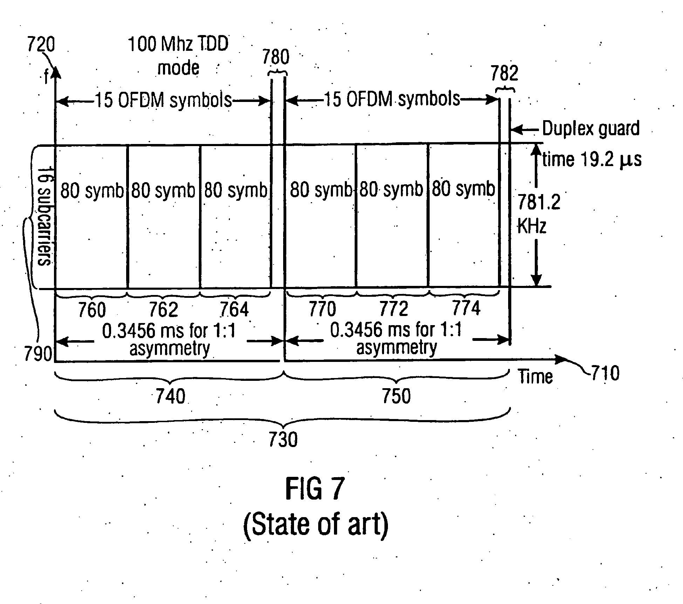

The WINNER TDD physical layer modes may serve as an example for an OFDM TDD physical layer mode with 100MHz bandwidth subdivided into 104 chunks and having an effective signal bandwidth of 81.25MHz, with the remaining 18.75MHz being used as frequency guard band. The chunks can be organized into frames or radio frames, wherein each frame may consist of a downlink (DL = downlink) time slot (TS = time slot) followed by an uplink (UL = uplink) time slot. The frame duration can be 691.2µs, which in the time direction consists of 6 chunks (i.e. the duration of 6 OFDM symbols) in total, and two duplex guard (DG = Duplex Guard) intervals organized into a downlink slot and an uplink slot. The DG are required to switch from transmission to reception, or vice versa, and they constitute a switching point or switching time slot between DL and UL. The duration of the switching point is assumed to be 19.2 µs. It is worth noting that this duration is close to the duration of an OFDM-symbol, which is 20.48 µs. A variation of the switching point consequently allows asymmetry ratios between 6:0, 5:1, 4:2, ..., 0:6 (UL:DL). Fig. 7 illustrates a WINNER radio frame, which is used in a symmetric way, i.e. 3 data chunks are allocated to each of UL and DL.

Fig. 7 shows a view graph illustrating a symmetric use of a WINNER TDD radio frame. Fig. 7 shows a time axis 710 and a frequency axis 720. Along the time axis 710 a radio frame 730 is shown. The radio frame is comprised of an uplink part 740 and a downlink part 750 according to the TDD technique, where the uplink part 740 and the downlink part 750 are of equal duration, subdividing the radio frame 730 symmetrically. The uplink part 740 is comprised of 3 chunks or data chunks 760, 762 and 764, and a duplex guard interval (DG) 780. Correspondingly, the downlink part 750 is comprised of three chunks or data chunks 770, 772, and 774, and a duplex guard interval 782. Each of the uplink parts 740 and the downlink part 750 has duration of 0.3456 milliseconds.

Moreover, each of the data chunks 760-764 and 770-774 has a chunk bandwidth 790, which is 781.2kHz. The chunk bandwidth 790 is subdivided into 16 subcarriers, and each chunk comprises 5 OFDM symbols, so each chunk carries 16x5=80 data symbols. The duration of a duplex guard interval is 19.2µs. Fig. 7 illustrates an example for a radio frame 730 according the 100MHz-TDD mode of the WINNER specifications.

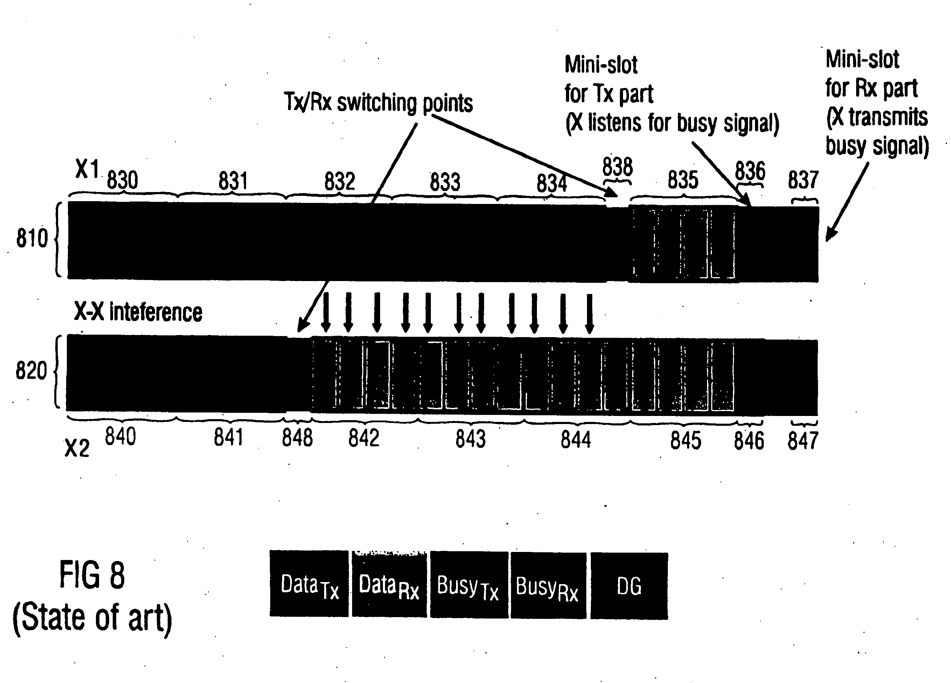

The busy tone concept, as introduced in H. Haas, V. D. Nguyen, P. Omiyi, N. H. Nedev, and G. Auer, "Interference aware medium access in cellular OFDMA/TDD network," in Proceedings of the International Conference on Communications ICC'06, Istanbul, Turkey: IEEE, June 11-15 2006, can be applied to the WINNER physical layer described in Fig. 7. As mentioned above, one advantageous feature of the TDD mode is the efficient support of channel asymmetry. This is also a key requirement of the fourth generation (4G = Fourth Generation) cellular systems because of the plurality of different packet data services with different traffic demands on UL and DL. Therefore, in order to be able to achieve high spectral efficiency, the interface may support varying channel asymmetries. This, however, introduces a same entity interference. Mobile stations (MS = Mobile Stations) interfere with other MS, and base stations (BS = Base Stations) interfere with other BS in addition to the well-known other entity interference from cellular FDD (FDD = Frequency Division Duplex) systems. When using the busy tone concept in such systems, problems may arise, which are illustrated in Fig. 8.

Fig. 8 shows a typical scenario, with different switching points between neighboring cells. Fig. 8 shows two radio frames 810 and 820. The radio frame 810 is labeled with X1 and radio frame 820 is labeled with X2. The letters X stand for either MS or BS. In the first cell, 5 chunks or data chunks 830-834 are used for data transmission, whereas in the second cell, only two chunks or data chunks 840 and 841 are used for data transmission. In a similar way, in the first cell, one chunk 836 is used for data reception and in the second cell four chunks 842, 843, 844 and 845 are used for data reception. Each link direction has an associated minislot for busy tone signaling at the end of the radio frame 810, respectively 820. The first cell uses minislot 836 for the busy signal of the transmission part and minislot 837 for the busy signal of the reception part. Correspondingly, the second cell utilizes minislot 846 for the busy signal of its transmission part and minislot 847 for the busy signal of its reception part. Since the minislots for the busy signals have to be at fixed and known positions, it is not possible to allocate the minislots for the busy signals directly before or after the TX/RX switching points, which are indicated by the slots 838 and 848 respectively in Fig. 8.

Since the X-entities, i.e. entities of the same type, transmit their busy tones at the same time instance, 836, 837, 846 and 847, they cannot share the busy signal of the other same entity. This essentially means that no interference protection from the same entity exists and from Fig. 8 it can be seen that the severity of same entity interference depends on the rates of asymmetry. In the example, X1 interferes with X2 during the third (832, 842), fourth (833, 843) and fifth (834, 844) chunks. Furthermore, if DGs overlap with busy signals, the busy signals can be masked and therefore disable the reservation feature of the busy tone concept.

It is therefore the objective of the present invention to provide an improved concept for using busy tone signaling.

The objective is achieved by a transceiver according to claim 1 and 18, and a method for transceiving according to claims 18 and 37.

The objective is achieved by a transceiver comprising a transmitter for transmitting a first payload signal in a first predefined payload signal time slot and, subsequently, a second payload signal in a second predefined payload signal time slot to at least one other transceiver. The transceiver further comprising a busy signal receiver for receiving a first busy signal in a first predefined busy signal time slot and a second busy signal in a second predefined busy signal time slot from the at least one other transceiver, the first busy signal indicating successful reception of the first payload signal and the second busy signal indicating successful reception of the second payload signal, wherein the transceiver is adapted for inserting a switching time slot between transmitting a payload signal and receiving a busy signal and wherein the first predefined busy signal time slot is arranged in time subsequent to the second predefined payload signal time slot.

The objective is further achieved by a transceiver comprising a receiver for receiving a first payload signal in a first predefined payload signal time slot and a second payload signal in a second predefined payload signal time slot from at least one other transceiver. The transceiver comprising a busy signal transmitter for transmitting a first busy signal in a first predefined busy signal time slot and a second busy signal in a second predefined busy signal time slot to the at least one other transceiver, the first busy signal indicating successful reception of the first payload signal and the second busy signal indicating successful reception of the second payload signal, wherein the transceiver is adapted for inserting a switching time slot between receiving a payload signal and transmitting a busy signal and wherein the first predefined busy signal time slot is arranged in time subsequent to the second predefined payload signal time slot.

The present invention is based on the finding, that the busy tone concept can be modified grouping payload signal time slots and busy signal time slots together in order to avoid frequent switching of the transmission direction at either side of the communication link. Therewith a lower number of DGs is required in order to carry out transmission with the busy tone concept. Moreover, busy tone masking can be avoided by staggering or spreading busy tone signals across a number of busy tone time slots, respectively minislots. Therewith the duration of a busy signal can be extended over the duration of a masking period of another busy signal.

Embodiments of the present invention allow busy tone signaling in cellular networks with variable TDD switching points and overcome the busy tone masking issue due to duplex guard times. Embodiments therewith overcome the issue of same entity interference and different channel asymmetries can be supported by means of variable UL/DL switching points, especially when the UL/DL switching time is in the range of a minislot duration for busy tone transmission. Embodiments take advantage of OFDM based systems, where minislot durations typically can be equivalent to the duration of an OFDM symbol, in other embodiments the duration of a minislot may be less than the duration of an OFDM symbol. Furthermore, as a side effect, some embodiments enable the respective entity to determine the adjusted UL/DL asymmetry in neighboring cells without the need of a central controller.

Embodiments therewith provide the advantage of full exploitation of the advantages of the busy tone concept, i.e. chunk protection and reservation, with variable switching points. Moreover, embodiments provide the advantage of an inherent signaling of the channel asymmetry used.

Embodiments of the present invention will be detailed using the accompanying figures, in which:
- Fig. 1a: shows an embodiment of a transceiver apparatus;
- Fig. 1b: shows another embodiment of a transceiver apparatus;
- Fig. 1c: shows an embodiment of a radio frame;
- Fig. 2a: shows a radio frame with busy tone signaling;
- Fig. 2b: shows an embodiment of a radio frame with different asymmetries;
- Fig. 3: shows two radio frames to illustrate busy tone masking;
- Fig. 4: shows two embodiments of a radio frame illustrating busy tone masking;
- Fig. 5: shows an embodiment of two radio frames with different asymmetries and staggering or spreading of the busy tone;
- Fig. 6: shows an embodiment of interleaved, dynamic, or long busy tone scheme;
- Fig. 7: shows a WINNER radio frame; and
- Fig. 8: shows two radio frames illustrating same entity interference.

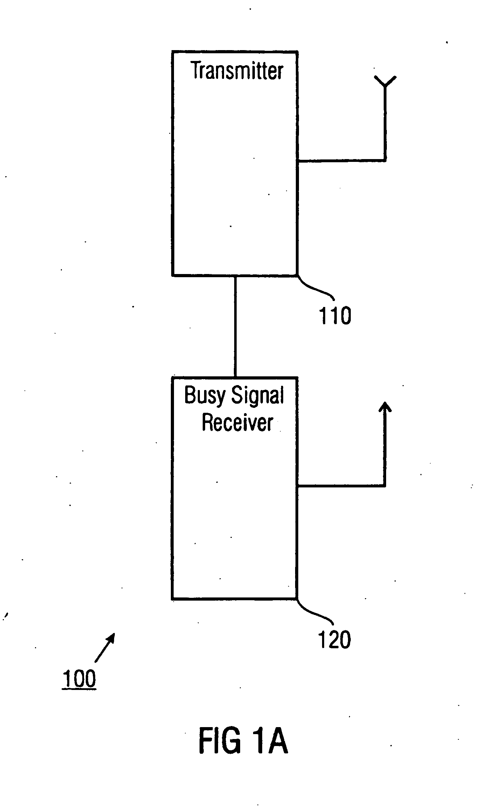

Fig. 1a shows a transceiver 100 comprising a transmitter 110 for transmitting a first payload signal in a first predefined payload signal time slot and, subsequently, a second payload signal in a second predefined payload signal time slot to at least one other transceiver. The transceiver further comprises a busy signal receiver 120 for receiving a first busy signal in a first predefined busy signal time slot and a second busy signal in a second predefined busy signal time slot from the at least one other transceiver, the first busy signal indicating successful reception of the first payload signal and the second busy signal indicating successful reception of the second payload signal, wherein the transceiver 100 is adapted for inserting a switching time slot or guard time slot between transmitting a payload signal and receiving a busy signal and wherein the first predefined busy signal time slot is arranged in time subsequent to the second predefined payload signal time slot.

In embodiments the first predefined payload signal time slot can correspond to a first predefined uplink payload signal time slot and the second predefined payload signal time slot can correspond to a second predefined uplink payload signal time slot and the transmitter 110 may be further adapted for transmitting downlink busy signals in predefined downlink busy signal time slots. The first predefined busy signal time slot may correspond to a first predefined uplink busy signal time slot and the second predefined busy signal time slot may correspond to a second predefined uplink busy signal time slot and the busy signal receiver 120 can be further adapted for receiving downlink payload signals in predefined downlink payload signal time slots.

In embodiments the first and second predefined uplink payload signal time slots and the predefined downlink busy signal time slot can be arranged in time without a switching time slot in between. The first and second predefined uplink busy signal time slots and the predefined downlink payload signal time slot can be arranged in time without a switching time slot in between.

In some embodiments the transceiver 100 may further comprise a switch for switching an antenna path between the transmitter 110 and the busy signal receiver 120 within the switching time slot, the antenna path may be a connection to one or more antennas. The antenna path may be switched due to a reuse of a high frequency components for transmitting and receiving and the switching may utilize a time being less than the switching time slot.

In an embodiment, the transmitter 110 and the busy signal receiver 120 can be adapted for transmitting and receiving OFDM signals. The OFDM signals may be according to the WINNER or LTE specifications. The transmitter 110 may be adapted for transmitting payload signals and the busy signal receiver 120 may be adapted for receiving busy signals being sequenced in radio frames being comprised of a plurality of consecutive payload signal time slots and a plurality of associated consecutive busy signal time slots.

In another embodiment, the transmitter 110 may be adapted for transmitting a payload signal data chunk during a payload signal time slot, a payload signal data chunk being a time-frequency slot comprising a plurality of OFDM symbols on a plurality of subcarriers. The transmitter 110 may be further adapted for transmitting a data chunk being a time-frequency slot comprising four OFDM symbols on e.g. 16 subcarriers. In other embodiments, the transmitter 110 may be adapted for sequentially transmitting 0-6 payload signal data chunks and the busy signal receiver 120 may be adapted for receiving busy signals for the 0-6 payload signal data chunks in a busy signal data chunk.

In further embodiments, the busy signal receiver 120 can be adapted for receiving a busy signal data chunk every seventh payload signal data chunk, the busy signal data chunk comprising 6 OFDM symbols having information on 6 busy signals.

In other embodiments, the busy signal receiver 120 may be adapted for receiving a busy signal data chunk comprising information on a plurality of busy signals, the information on one busy signal being comprised in a plurality of OFDM symbols in the busy signal data chunk. The busy signal receiver 120 may be adapted for receiving a busy signal data chunk, in which information on one busy signal is comprised in two OFDM symbols. The busy signal receiver 120 may be further adapted for receiving a busy signal data chunk comprising OFDM symbols being shorter in duration or comprising less subcarriers than the OFDM symbols of a payload signal data chunk. In other embodiments, the transmitter 110 may be adapted for transmitting or the busy signal receiver 120 may be adapted for receiving OFDM symbols having a longer duration than the switching time slot. The busy signal receiver 120 may be adapted for receiving additional feedback information within the busy signal time slots.

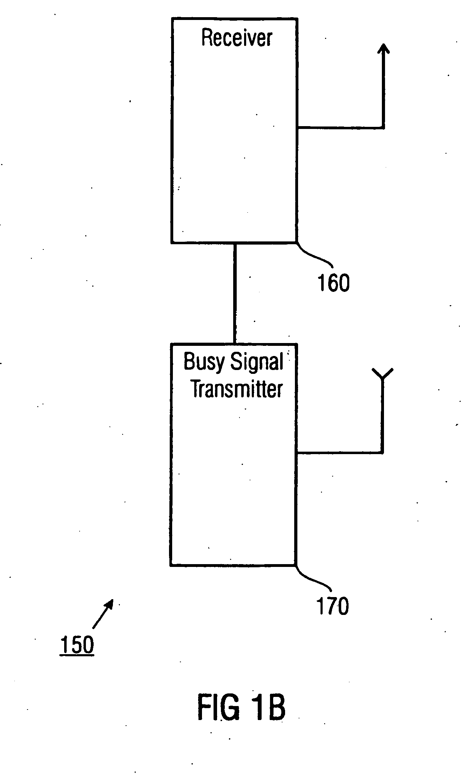

Fig. 1b shows another embodiment of a transceiver 150 comprising a receiver 160 for receiving a first payload signal in a first predefined payload signal time slot and a second payload signal in a second predefined payload signal time slot from at least one other transceiver. The transceiver 150 further comprising a busy signal transmitter 170 for transmitting a first busy signal in a first predefined busy signal time slot and a second busy signal in a second predefined busy signal time slot to the at least one other transceiver, the first busy signal indicating successful reception of the first payload signal and the second busy signal indicating successful reception of the second payload signal, wherein the transceiver 150 is adapted for inserting a switching time slot or guard time slot between receiving a payload signal and transmitting a busy signal and wherein the first predefined busy signal time slot is arranged in time subsequent to the second predefined payload signal time slot.

In embodiments the first predefined payload signal time slot can correspond to a first predefined downlink payload signal time slot and the second predefined payload signal time slot can correspond to a second predefined downlink payload signal time slot and the receiver 160 can further be adapted for receiving uplink busy signals in predefined uplink busy signal time slots. Moreover, the first predefined busy signal time slot can correspond to a first predefined downlink busy signal time slot and the second predefined busy signal time slot can correspond to a second predefined downlink busy signal time slot and the busy signal transmitter 170 may be further adapted for transmitting uplink payload signals in predefined uplink payload signal time slots.

In embodiments the first and second predefined downlink payload signal time slots and the predefined uplink busy signal time slots can be arranged in time without a switching time slot in between. The first and second predefined downlink busy signal time slots and the predefined uplink payload signal time slot may be arranged in time without a switching time slot in between.

In some embodiments the transceiver 150 may further comprise a switch for switching an antenna path between the receiver 160 and the busy signal transmitter 170 within the switching time slot, the antenna path being a connection to one or more antennas. The antenna path may be switched due to a reuse of a high frequency components for transmitting and receiving and the switching may utilize a time being less than the switching time slot.

transceiver 150 comprising a receiver 160 for receiving payload signals in predefined payload signal time slots from at least one other transceiver. The transceiver 150 further comprises a busy signal transmitter 170 for transmitting busy signals in predefined busy signal time slots to the at least one other transceiver, a busy signal indicating successful reception of a payload signal in an associated payload signal time slot, wherein the transceiver 150 is adapted for utilizing a switching time slot between receiving a payload signal and transmitting a busy signal and wherein the busy signal transmitter is adapted for transmitting at least two busy signals in predefined busy signal time slots being sequenced after two associated payload signal time slots.

In embodiments, the receiver 160 may be adapted for receiving and the busy signal transmitter 170 may be adapted for transmitting OFDM symbols. The OFDM signals may be according to the WINNER or the LTE specifications. The receiver 160 can further be adapted for receiving payload signals and the busy signal transmitter 170 can further be adapted for transmitting busy signals sequenced in radio frames, being comprised of a plurality of consecutive payload signal time slots and a plurality of associated consecutive busy signal time slots.

In further embodiments, the receiver 160 may be adapted for receiving a payload signal data chunk during a payload signal time slot, a payload signal data chunk being a time-frequency slot comprising a plurality of OFDM symbols on a plurality of subcarriers. The receiver 160 may be adapted for receiving a payload signal data chunk being a time-frequency slot comprising four OFDM symbols on e.g. 16 subcarriers. The receiver 160 may be further adapted for sequentially receiving 0-6 payload signal data chunks and the busy signal transmitter 170 may be adapted for transmitting busy signals for the 0-6 payload signal data chunks in a busy signal data chunk. The busy signal transmitter 170 can be further adapted for transmitting a busy signal data chunk every 7th payload signal data chunk, the busy signal data chunk may comprise 6 OFDM symbols having information on 6 busy signals.

In an embodiment, the busy signal transmitter 170 can be adapted for transmitting a busy signal data chunk comprising information on a plurality of busy signals, with information on one busy signal being comprised in a plurality of OFDM symbols in the busy signal data chunk. The busy signal transmitter 170 may be adapted for transmitting a busy signal data chunk in which information on one busy signal is comprised in 2 OFDM symbols.

In embodiments, the busy signal transmitter 170 may be adapted for transmitting a busy signal data chunk comprising OFDM symbols being shorter in duration or comprising less subcarriers than the OFDM symbols of the payload signal data chunks.

In embodiments, the receiver 160 may be adapted for receiving or the busy signal transmitter 170 may be adapted for transmitting OFDM symbols having a longer duration than the switching time slots. In embodiments, the busy signal transmitter 170 may be adapted for transmitting additional feedback information within the busy signal time slots.

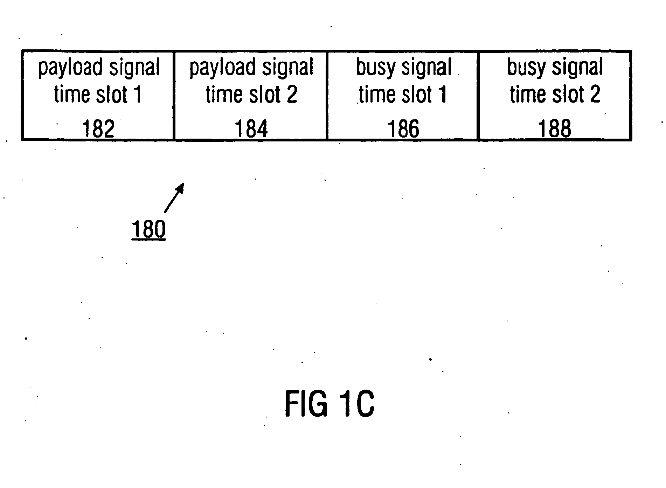

Fig. 1c shows a radio frame with two payload signal time slots 182 and 184 and two associated busy signal time slots 186 and 188. In the embodiment depicted in Fig. 1c, the busy signal time slot 186 may be associated with the payload signal time slot 182, respectively, the busy signal times slot 188 may be associated with the payload signal time slot 184. Fig. 1c shows a radio frame wherein two of the predefined busy signal time slots are sequenced after two associated payload signal time slots.

In the following embodiments it is assumed that the coherence time of the channel is larger than the WINNER TDD frame duration. Under this assumption it is perfectly valid, to group the busy tones for different chunks in a chunk at the end, or at the beginning of the frame.

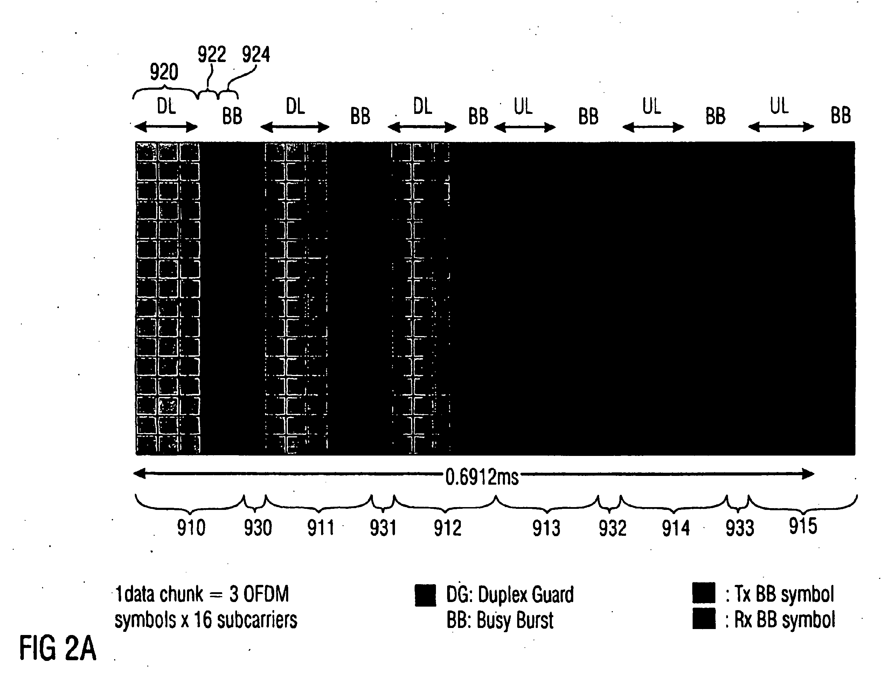

According to Fig. 8 entities of the same type may transmit their busy tones at the same time instance, 836, 837, 846 and 847, so they cannot share the busy signal of the other same entity. This essentially means that no interference protection from the same entity exists and from Fig. 8 it can be seen that the severity of same entity interference depends on the rates of asymmetry. In the example, X1 interferes with X2 during the third (832, 842), fourth (833, 843) and fifth (834, 844) chunks. In order to solve this problem, the busy tone part somehow has to follow the asymmetry in the data part according to an embodiment. This would mean that every chunk, as the granularity defining unit, has to get assigned a busy tone, according to the busy tone specification, compare H. Haas, V. D. Nguyen, P. Omiyi, N. H. Nedev, and G. Auer, "Interference aware medium access in cellular ofdma/tdd network," in Proceedings of the International Conference on Communications ICC'06, Istanbul, Turkey: IEEE, June 11-15 2006). An embodiment showing a way of achieving this is illustrated in Fig. 2a.

Fig. 2a illustrates a number of data chunks 910-915, of which data chunks 910, 911 and 912 are used for the downlink direction and data chunks 913, 914 and 915 are used for the uplink direction. Each data chunk is comprised of three OFDM symbols x 16 subcarriers. As an example, data chunk 910 is detailed with 3 OFDM symbols 920, a DG 922 and a busy burst or busy signal 924. All other data chunks 911-915 are composed in a similar way. Between consecutive data chunks of the same transmission direction, i.e. between consecutive DL data chunks or UL data chunks, there are extra DGs 930-933, because of the opposite transmission directions of the respective busy bursts and data parts. In Fig. 2a it can be seen, that between data chunk 912 and data chunk 913 there is no extra DG, since the busy burst of data chunk 912 has the same transmission direction as the data part of the uplink data chunk 913.

In Fig. 2a, one of the 6 OFDM symbols that form a chunk is defined as a minislot, which carries the busy signal. As the busy tone transmission is in opposite direction to the data transmission direction, the receiver broadcasts the busy signal, additional DGs are required. If a DL chunk follows another DL chunk, or a UL chunk follows another UL chunk, essentially 2 DGs are needed. If a DL chunk follows a UL chunk, or vice versa, only one DG is required. Recalling that a DG duration may be approximately the same as the duration of an OFDM symbol, in the worst case, two out of the six OFDM symbols in a chunk are used to switch the transmission direction. Obviously, this way of solving the problem is very inefficient.

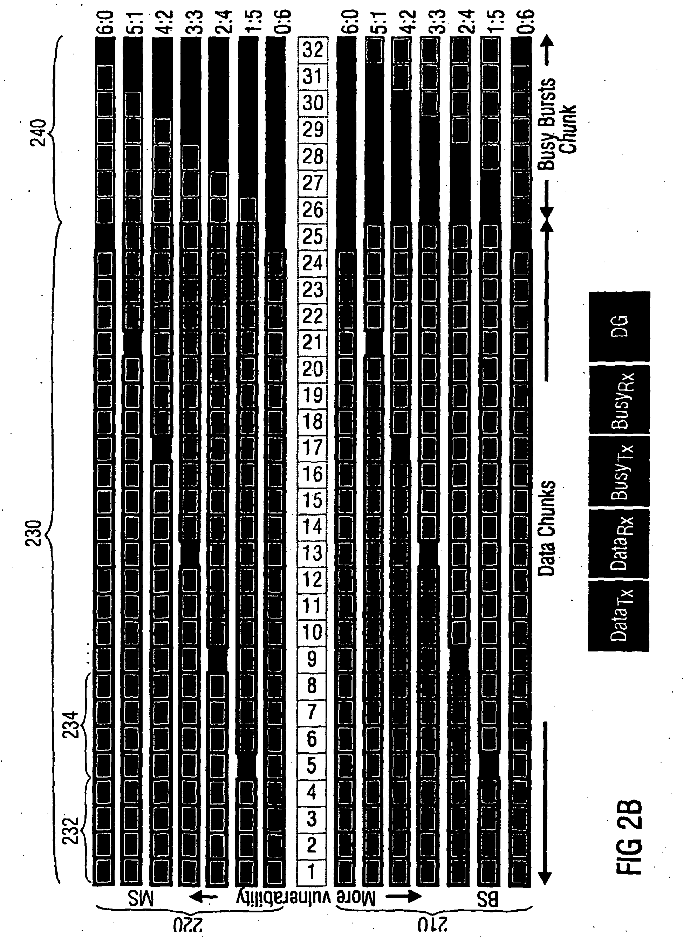

The efficiency of the known solution in Fig. 2a can be significantly increased by dedicating one special chunk, i.e. a busy signal data chunk, at the beginning or end of the frame for busy signal transmission. This is illustrated in the embodiment of a radio frame depicted in Fig. 2b. Fig. 2b shows examples of several asymmetric and symmetric radio frames of a base station 210 and the corresponding radio frames of a mobile station 220. Each radio frame consists of a data part 230, in which a plurality of payload signal data chunks, as for example, 232 and 234 are transmitted, where one payload signal data chunk may be transmitted or received in dependence on the asymmetry of the radio frame.

The data part 230 is followed by a busy signal data chunk 240, comprising the busy signals associated with the payload signal data chunks. Fig. 2b shows in an example 6 payload signal data chunks in the data part 230 with the associated 6 busy signals in the busy signal data chunk 240. Both the data part and the busy signal data chunks comprise a duplex guard interval 250 and respectively 252, which's positions depend on the asymmetry of the radio frame and which are dedicated to the data part 230, respectively their busy signal data chunk 240, for illustration purposes, and which is not to be understood in any limiting way. In the radio frame illustrated in Fig. 2b, four OFDM symbols form a data chunk or payload signal data chunk, as for example, in the chunks 232 and 234. The last chunk of the radio frame is reserved for busy signal transmission. To avoid the insertion of additional DGs, all busy slots are grouped together and appended directly to the associated UL/DL sub-frames, to form all together and having 6 OFDM symbols in the example illustrated in Fig. 2b comprised in a busy signal data chunk 240.

As can be seen, for the entire frame, only two DG periods are needed, i.e. no additional DGs are required compared to the original frame structure. Furthermore, it can be seen that the total number of all OFDM symbols per frame, in the example depicted in Fig. 2b it is 32 OFDM symbols, is also the same as in the original case. The same holds for the number of data chunks, which is 6 in the respective example in Fig. 2b. Each of the 6 busy tone OFDM symbols is associated with one data chunk. The locations of the DGs are dependent on the rate of asymmetry in the system. For example, assume a rate of asymmetry of 4:2 (DL:UL) this means that the MS receives only 4 chunks, i.e. on symbols 1-16. The 17th symbol is used for switching to the UL direction. The MS then transmits on the last two chunks, i.e. on symbols 18-25. After UL transmission, no UL/DL switching is required, as the first 4 OFDM symbols of the busy tone chunk are associated to the first four downlink chunks, i.e. the MS continues transmitting on those four OFDM symbols. It transmits the respective busy tone. The following symbol is a DG, cf. symbol 30, and the last remaining OFDM symbols are busy tones associated to the UL direction, the MS receives, and continuous receiving at the beginning of the subsequent frame. As a consequence, no additional DGs are needed.

The frame structure as depicted in Fig. 2b has the advantage that the number of UL/DL switching points is minimum, i.e. only two. Terminals can be classified according to the degree of vulnerability, where the greater the number of receiving slots, the more vulnerable, i.e. the most affected victim has the most receiving data slots. The least vulnerable entities, and most likely interferers are in the middle of the diagram, and the level of vulnerability increases towards the upper and lower edge of the diagram. In this context, an interesting observation can be made, the more likely one entity acts as an interferer, i.e. high number of transmit data chunks, the more often these entities have to listen to busy signals.

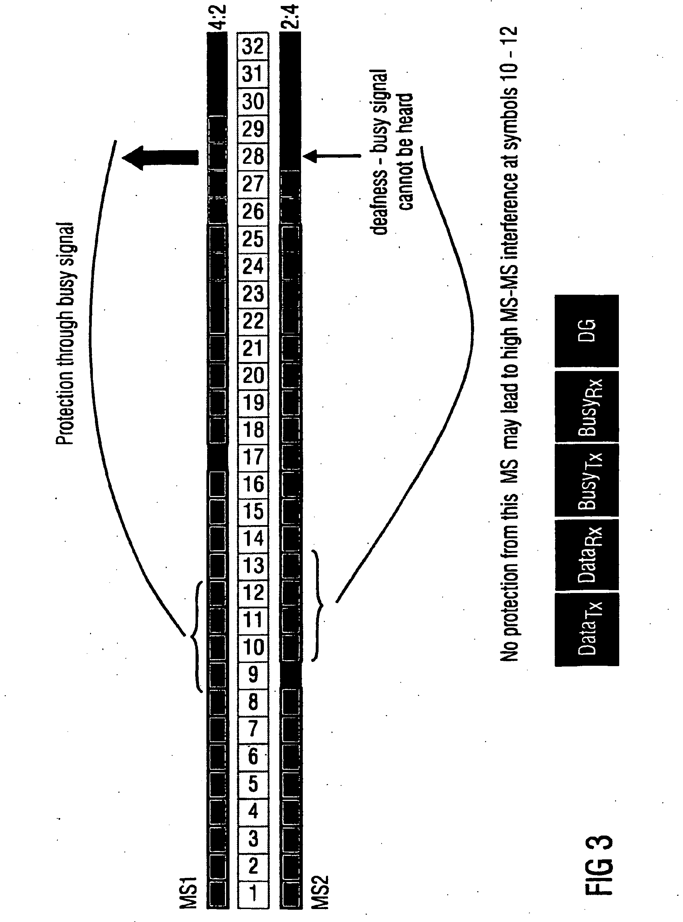

Embodiments according to Fig. 2b may generate a further problem, when the demanded channel asymmetry varies among adjacent cells. As indicated in Fig. 2b, the TDD mode is very well suited for this purpose. However, the busy tone transmission imposes a challenge to be solved, which will be explained in the following according to Fig. 3. Fig. 3 shows a similar radio frame structured as it was discussed with the help of Fig. 2b. Therefore, a repeated description of the frame structure, i.e. payload signal data chunks and busy signal data chunks etc. is omitted. This also holds for the following figures. Fig. 3 shows two radio frames of two MSs, MS1 and MS2. In the example, two mobile stations are assumed to be in different cells. The channel asymmetry is 4:2 for MS1 and 2:4 for MS2, respectively. MS1 in the first cell, with asymmetry 4:2 receives on the third chunk, i.e. on symbols 9-12, and it transmits the busy tone with a symbol 28 in the busy tone chunk.

The second mobile station, MS2, which has asymmetry 2:4 which intends to transmit on the third chunk, cannot hear the busy signal from MS1 due to the DG. This effect is referred to as busy tone masking. As a consequence MS2 transmits, as the received busy signal is clearly below a preset threshold and only noise is received in this two-user scenario in the busy signal time slot. If the MS2 is very close to MS1, MS1 will not be able to receive its data correctly, and the interference protection property of the busy tone concept is violated.

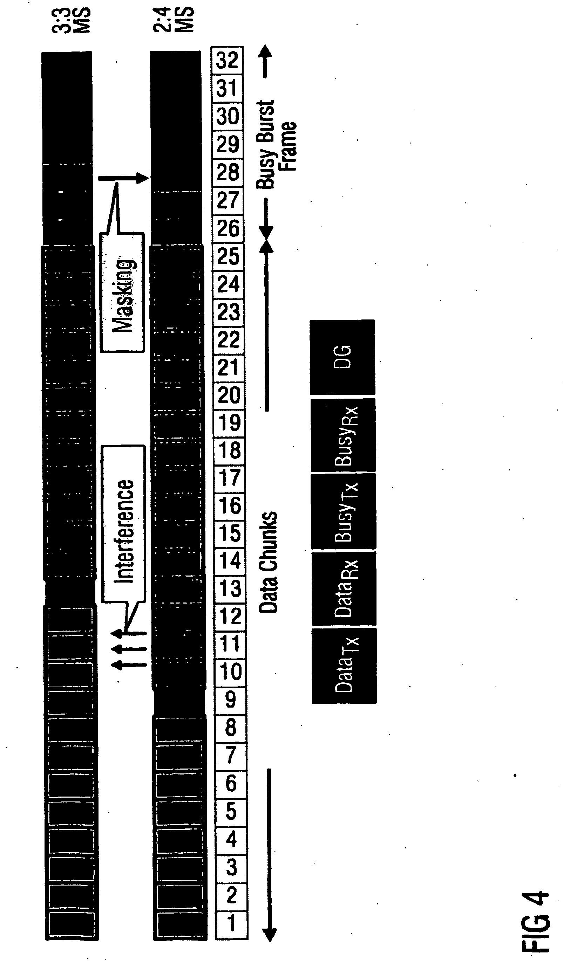

Another illustration of the busy tone masking problem that may occur is depicted in Fig. 4. Fig. 4 shows again 2 radio frames, which are comprised of data chunks and a busy burst frame or busy burst data chunk. At the top of Fig. 4, a radio frame for a mobile station having a 3:3 asymmetry is depicted, whereas at the bottom of Fig. 4 a radio frame for a MS with 2:4 asymmetry is depicted. The busy tone masking problem may occur when adjacent cells demand different channel asymmetries. Fig. 4 shows that the mobile station having the 2:4 asymmetry cannot overhear the busy burst transmitted by the other MS during symbol 28. Therefore, the MS with the channel asymmetry 2:4 transmits during the next radio frame on the symbols 10, 11 and 12 and may cause interference to the other MS.

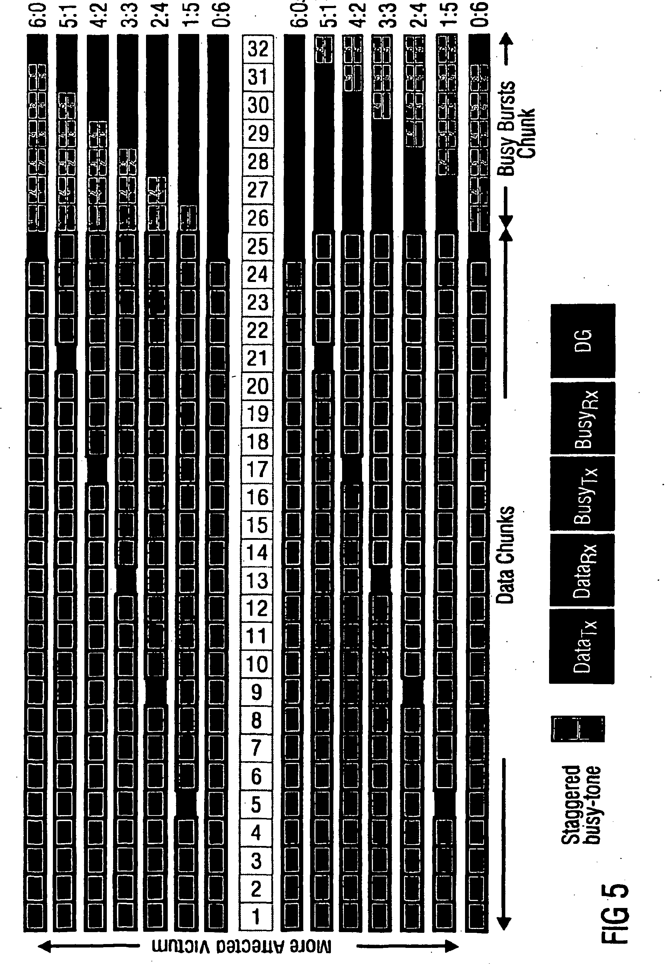

Embodiments may solve this problem by staggered and dynamic busy burst schemes or respectively by interleaved, dynamic and long busy burst schemes. Embodiments exploit the fact that subcarriers within on chunk are correlated as the coherence bandwidth is generally greater than the range of frequencies spanned by one chunk. As a consequence, the busy signal does not have to be on all subcarriers within a chunk. In the extreme, the transmission on only one subcarrier suffices. Embodiments partially solve the busy tone masking problem by transmitting the busy tone symbols in a staggered fashion, where each busy burst symbol will be transmitted over two halves of two consequent OFDM symbols. Thereby it can be guaranteed that at least one half can be heard, when the other is masked. Fig. 5 illustrates this example, using the view graph that was already described with the help of Fig. 2b.

Fig. 5 shows that the busy signals associated with the payload signal data chunk are now staggered or spread across at least two OFDM symbols within the busy signal data chunk. Again considering two adjacent cells with DL/UL asymmetry of, for example, 1:5 and the other with asymmetry 3:3. Without the staggered busy burst, the MS in the first cell, with the 1:5 asymmetry ratio, would not detect the second busy burst symbol of the MS in the cell with asymmetry 3:3, and would thus interfere with the symbols indexed 6 to 8 at that MS. However, with the staggering, the required busy burst is also sent in the third busy burst symbol, as is indicated in Fig. 5, which is heard by the first MS with asymmetry 1:5 and thus interference is avoided. However, this is not the case with the busy burst signal sent from a MS with asymmetry 2:4. The first MS by failing to detect the second busy burst symbol, fails to detect the signal associated with symbols 6 to 8, and thus still interferes with the MS with asymmetry 2:4 receiving data during this time without the embodiment.

Given the DG exceeds the duration of one busy slot, the number of staggered busy tones can be set larger than two in other embodiments, so effectively avoiding the masking problem for arbitrary DG lengths. To this end, the embodiment illustrated in Fig. 2b can be viewed as a special case of the staggered busy slots, where the number of staggered busy slots is 1.

Moreover, the busy slots are also foreseen to carry low-rate feedback piggy packed on the busy signal. To this end, in Fig. 5, the 6th busy slot is allocated less subcarriers than busy slots 1-5. This limitation can be easily overcome by a cyclic staggering of busy slots. In this case, the empty busy slots in Fig. 5 are assigned to the last chunk, i.e. chunk 6 in Fig. 5.

The embodiments presented previously impose an overhead of 1 OFDM symbol per chunk for busy tone reservation. For the WINNER system the overhead amounts to 6 OFDM symbols per frame. On the other hand, only one sub carrier per chunk is required to effectively support the busy signal approach.

Remaining subcarriers, i.e. 15 for the considered WINNER parameters, are available for low-rate feedback piggy packed on the busy signal. It might happen that the required low-rate feedback is less than 15 subcarriers per chunk, resulting in unnecessary high overheads. This problem can effectively be avoided by choosing a shorter OFDM symbol length of the busy chunks than for the corresponding data chunks. For instance, cutting the length of the busy chunk by a factor of 2, means that the busy signal overhead is approximately halved. Since the cyclic prefix overhead, typically 5-20% of the OFDM symbol duration, does not reduce by shortening the OFDM symbol length, the overhead reduction is reduced accordingly. Then one chunk only carries 8 subcarriers, which reduces the number of subcarriers for low rate feedback to 7. Embodiments therewith may provide the advantage, that system efficiency may be further increased by choosing less subcarriers for a busy signal data chunk than for a payload signal data chunk.

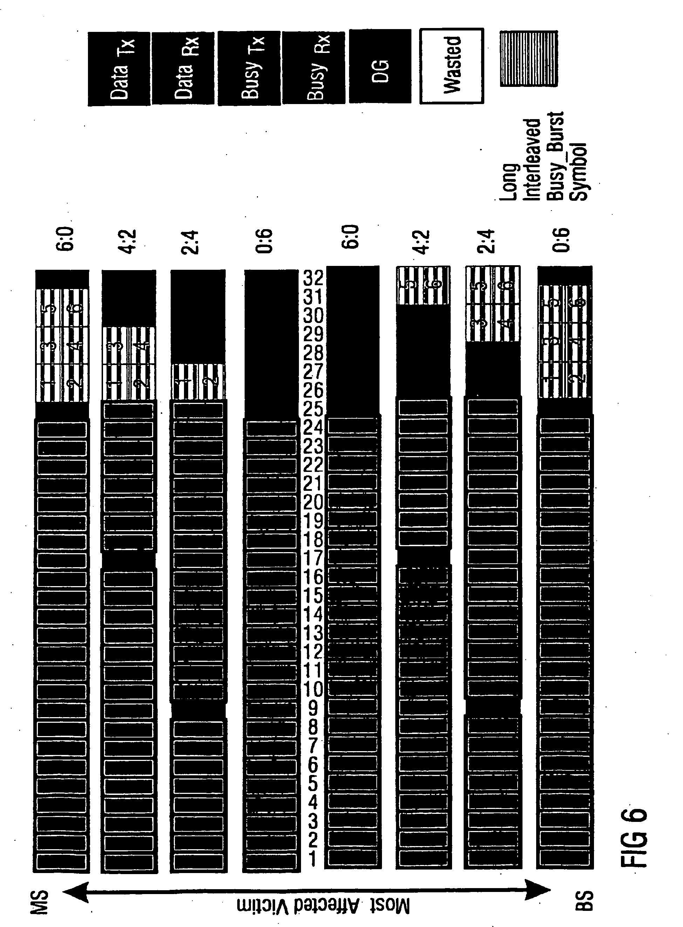

In other embodiments, the busy burst signal uses two consecutive OFDM symbols, so that the effective length of the busy burst signal is greater than the DG. In order to minimize the overhead, frequency correlation within a chunk is exploited and interleaving is employed. Fig. 6 shows a corresponding view graph of this embodiment. It can be seen, that one busy signal spans 2 OFDM symbols of the busy signal data chunk. This embodiment completely eliminates the busy tone masking problem. This, however, comes at the expense of reduced flexibility in supporting different channel asymmetry ratios. Namely, only even symmetries are feasible with the set up as can be seen in Fig. 6. Nevertheless, these embodiments circumvent the problem of busy tone masking.

Embodiments of the present invention take advantage of the busy tone signaling scheme avoiding high overheads, e.g. evoked by DGs, by grouping payload signal time slots and busy signal time slots. Embodiments may make use of the WINNER defined physical layer structure for the TDD mode. Embodiments of the present invention are not restricted to the WINNER physical layer mode and may be adapted to arbitrary frame structures. The advantages of embodiments are utilized if at least two payload signal time slots are grouped together followed by two associated busy signal time slots, compare Fig. 1c. Embodiments of the present invention therewith apply to busy tone protocol implementations, and are not restricted to the above described detailed physical layer parameters.

Depending on certain implementation requirements of the inventive methods, the inventive methods can be implemented in hardware or in software. The implementation can be performed using a digital storage medium, in particular a disc, DVD or CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods, when the computer program product runs on a computer. In other words, the inventive methods are, therefore, a computer program having a program code for performing at least one of the inventive methods when the computer program runs on a computer.

### List of Reference Signs

- 100: Transceiver
- 110: Transmitter
- 120: Busy Signal Receiver
- 150: Transceiver
- 160: Receiver
- 170: Busy Signal Transmitter
- 180: Radio Frame
- 182: Payload Signal Time Slot 1
- 184: Payload Signal Time Slot 2
- 186: Busy Signal Time Slot 1
- 188: Busy Signal Time Slot 2

- 210: Radio Frame of Base Station
- 220: Radio Frame of Mobile Station
- 230: Data Part
- 232: Payload Signal Data Chunk
- 234: Payload Signal Data Chunk
- 240: Busy Signal Data Chunk

- 710: Time Axis
- 720: Frequency Axis
- 730: Radio Frame
- 740: Uplink Chunks
- 750: Downlink Chunks
- 760: Uplink Chunk
- 762: Uplink Chunk
- 764: Uplink Chunk
- 770: Downlink Chunk
- 772: Downlink Chunk
- 774: Downlink Chunk
- 780: Duplex Guard
- 782: Duplex Guard
- 790: Chunk Bandwidth

- 810: Radio Frame
- 820: Radio Frame
- 830: Transmit Chunk cell 1
- 831: Transmit Chunk cell 1
- 832: Transmit Chunk cell 1
- 833: Transmit Chunk cell 1
- 834: Transmit Chunk cell 1
- 835: Receive Chunk cell 1
- 836: Busy Signal Transmit Part
- 837: Busy Signal Receive Part
- 838: Switching Point cell 1
- 840: Transmit Chunk cell 2
- 841: Transmit Chunk cell 2
- 842: Receive Chunk cell 2
- 843: Receive Chunk cell 2
- 844: Receive Chunk cell 2
- 845: Receive Chunk cell 2
- 846: Busy Signal Transmit Part
- 847: Busy Signal Receive Part
- 848: Switching Point cell 2

- 910: Downlink Data Chunk
- 911: Downlink Data Chunk
- 912: Downlink Data Chunk
- 913: Uplink Data Chunk
- 914: Uplink Data Chunk
- 915: Uplink Data Chunk
- 920: Data Part
- 922: Duplex Guard
- 924: Busy Burst
- 930: Duplex Guard
- 931: Duplex Guard
- 932: Duplex Guard
- 933: Duplex Guard

## Claims

1. Transceiver (100) comprising
a transmitter (110) for transmitting a first payload signal in a first predefined payload signal time slot and, subsequently, a second payload signal in a second predefined payload signal time slot to at least one other transceiver; and
a busy signal receiver (120) for receiving a first busy signal in a first predefined busy signal time slot and a second busy signal in a second predefined busy signal time slot from the at least one other transceiver, the first busy signal indicating successful reception of the first payload signal and the second busy signal indicating successful reception of the second payload signal;
wherein the transceiver (100) is adapted for inserting a switching time slot between transmitting a payload signal and receiving a busy signal and wherein the first predefined busy signal time slot is arranged in time subsequent to the second predefined payload signal time slot.

2. Transceiver (100) of claim 1, wherein the first predefined payload signal time slot corresponds to a first predefined uplink payload signal time slot and the second predefined payload signal time slot corresponds to a second predefined uplink payload signal time slot and wherein the transmitter (110) is further adapted for transmitting downlink busy signals in predefined downlink busy signal time slots and wherein the first predefined busy signal time slot corresponds to a first predefined uplink busy signal time slot and the second predefined busy signal time slot corresponds to a second predefined uplink busy signal time slot and wherein the busy signal receiver (120) is further adapted for receiving downlink payload signals in predefined downlink payload signal time slots.

3. Transceiver (100) of claim 2, wherein the first and second predefined uplink payload signal time slots and the predefined downlink busy signal time slot are arranged in time without a switching time slot in between.

4. Transceiver (100) of one of the claims 2 or 3, wherein the first and second predefined uplink busy signal time slots and the predefined downlink payload signal time slot are arranged in time without a switching time slot in between.

5. Transceiver (100) of one of the claims 1 to 4, further comprising a switch for switching an antenna path between the transmitter (110) and the busy signal receiver (120) within the switching time slot, the antenna path being a connection to one or more antennas.

6. Transceiver (100) of one of the claims 1 to 5, wherein the transmitter (110) is adapted for transmitting and the busy signal receiver (120) is adapted for receiving OFDM signals.

7. Transceiver (100) of claim 6, wherein the transmitter (110) is adapted for transmitting and the busy signal receiver (120) is adapted for receiving OFDM signals according to the WINNER or LTE specifications.

8. Transceiver (100) of one of the preceding claims, wherein the transmitter (110) is adapted for transmitting the payload signals and the busy signal receiver (120) is adapted for receiving the busy signals being sequenced in radio frames being comprised of a plurality of consecutive payload signal time slots and a plurality of associated consecutive busy signal time slots.

9. Transceiver (100) of one of the preceding claims, wherein the transmitter (110) is adapted for transmitting a payload signal data chunk during a payload signal time slot, a payload signal data chunk being a time-frequency slot comprising a plurality of OFDM symbols on a plurality of subcarriers.

10. Transceiver (100) of claim 9, wherein the transmitter (110) is adapted for transmitting the data chunk being a time-frequency slot comprising four OFDM symbols on 16 subcarriers.

11. Transceiver (100) of one of the claims 9 or 10, wherein the transmitter (110) is adapted for not transmitting or for sequentially transmitting 1-6 payload signal data chunks and wherein the busy signal receiver (120) is adapted for not receiving or for receiving busy signals for the 1-6 payload signal data chunks in a busy signal data chunk.

12. Transceiver (100) of claim 11, wherein the busy signal receiver (120) is adapted for receiving the busy signal data chunk every 7th payload signal data chunk, the busy signal data chunk comprising 6 OFDM symbols having information on 6 busy signals.

13. Transceiver (100) of one of the claims 11 or 12, wherein the busy signal receiver (120) is adapted for receiving busy signal data chunks comprising information on a plurality of busy signals, the information on one busy signal being comprised in a plurality of OFDM symbols in the busy signal data chunk.

14. Transceiver (100) of claim 13, wherein the busy signal receiver (120) is adapted for receiving busy signal data chunks, in which information on one busy signal is comprised in two OFDM symbols or in which one OFDM symbols comprises information on multiple busy signal.

15. Transceiver (100) of one of the claims 6-14, wherein the busy signal receiver (120) is adapted for receiving a busy signal data chunk comprising OFDM symbols being shorter in duration or comprising less subcarriers than the OFDM symbols of a payload signal data chunk.

16. Transceiver (100) of one of the claims 1-15, wherein the transmitter (110) is adapted for transmitting or the busy signal receiver (120) is adapted for receiving OFDM symbols having a longer duration than the switching time slot.

17. Transceiver (100) of one of the preceding claims, wherein the busy signal receiver (120) is adapted for receiving additional feedback information within the busy signal times slots.

18. Method for transceiving, comprising the steps of
transmitting a first payload signal in a first predefined payload signal time slot to at least one transceiver;
transmitting a second payload signal in a second predefined payload signal time slot to the at least one transceiver;
inserting a switching time slot between transmitting a payload signal and receiving a busy signal;
receiving a first busy signal in a first predefined busy signal time slot from the at least one transceiver, the first busy signal indicating successful reception of the first payload signal;
receiving a second busy signal in a second predefined busy signal time slot from the at least one transceiver, the second busy signal indicating successful reception of the second payload signal; and
receiving the first predefined busy signal time slot subsequent to the second payload signal time slot.

19. Computer program having a program code for performing the method according to claim 18, when the program code runs on a computer.

20. Transceiver (150) comprising
a receiver (160) for receiving a first payload signal in a first predefined payload signal time slot and a second payload signal in a second predefined payload signal time slot from at least one other transceiver; and
a busy signal transmitter (170) for transmitting a first busy signal in a first predefined busy signal time slot and a second busy signal in a second predefined busy signal time slot to the at least one other transceiver, the first busy signal indicating successful reception of the first payload signal and the second busy signal indicating successful reception of the second payload signal;
wherein the transceiver (150) is adapted for inserting a switching time slot between receiving a payload signal and transmitting a busy signal and wherein the first predefined busy signal time slot is arranged in time subsequent to the second predefined payload signal time slot.

21. Transceiver (150) of claim 20, wherein the first predefined payload signal time slot corresponds to a first predefined downlink payload signal time slot and the second predefined payload signal time slot corresponds to a second predefined downlink payload signal time slot and wherein the receiver (160) is further adapted for receiving uplink busy signals in predefined uplink busy signal time slots and wherein the first predefined busy signal time slot corresponds to a first predefined downlink busy signal time slot and the second predefined busy signal time slot corresponds to a second predefined downlink busy signal time slot and wherein the busy signal transmitter (170) is further adapted for transmitting uplink payload signals in predefined uplink payload signal time slots.

22. Transceiver (150) of claim 21, wherein the first and second predefined downlink payload signal time slots and the predefined uplink busy signal time slots are arranged in time without a switching time slot in between.

23. Transceiver (150) of one of the claims 21 or 22, wherein the first and second predefined downlink busy signal time slots and the predefined uplink payload signal time slot are arranged in time without a switching time slot in between.

24. Transceiver (150) of one of the claims 20 to 23, further comprising a switch for switching an antenna path between the receiver (160) and the busy signal transmitter (170) within the switching time slot, the antenna path being a connection to one or more antennas.

25. Transceiver (150) of one of the claims 20 to 24, wherein the receiver (160) is adapted for receiving and the busy signal transmitter (170) is adapted for transmitting OFDM signals.

26. Transceiver (150) of claim 25, wherein the receiver (160) is adapted for receiving and the busy signal transmitter (170) is adapted for transmitting OFDM signals according to the WINNER or LTE specifications.

27. Transceiver (150) of one of the claims 20-26, wherein the receiver (160) is adapted for receiving the payload signals and the busy signal transmitter (170) is adapted for transmitting the busy signals being sequenced in radio frames being comprised of a plurality of consecutive payload signal time slots and a plurality of associated consecutive busy signal time slots.

28. Transceiver (150) of one of the claims 20-27, wherein the receiver (160) is adapted for receiving a payload signal data chunk during a payload signal time slot, a payload signal data chunk being a time-frequency slot comprising a plurality of OFDM symbols on a plurality of subcarriers.

29. Transceiver (150) of claim 28, wherein the receiver (160) is adapted for receiving the payload signal data chunk being a time-frequency slot comprising four OFDM symbols on 16 subcarriers.

30. Transceiver (150) of one of the claims 28 or 29, wherein the receiver (160) is adapted for not receiving or for sequentially receiving 1-6 payload signal data chunks and wherein the busy signal transmitter (170) is adapted for not transmitting or for transmitting busy signals for 1-6 payload signal data chunks in a busy signal data chunk.

31. Transceiver (150) of claim 30, wherein the busy signal transmitter (170) is adapted for transmitting a busy signal data chunk every 7th payload signal data chunk, the busy signal data chunk comprising 6 OFDM symbols having information on 6 busy signals.

32. Transceiver (150) of one of the claims 30 or 31, wherein the busy signal transmitter (170) is adapted for transmitting a busy signal data chunk comprising information on a plurality of busy signals, the information on one busy signal being comprised in a plurality of OFDM symbols in the busy signal data chunk.

33. Transceiver (150) of claim 32, wherein the busy signal transmitter (170) is adapted for transmitting a busy signal data chunk in which information on one busy signal is comprised in 2 OFDM symbols.

34. Transceiver (150) of one of the claims 21-33, wherein the busy signal transmitter (170) is adapted for transmitting a busy signal data chunk comprising OFDM symbols being shorter in duration or comprising less subcarriers than the OFDM symbols of the payload signal data chunks.

35. Transceiver (150) of one of the claims 20-34, wherein the receiver (160) is adapted for receiving or the busy signal transmitter (170) is adapted for transmitting OFDM symbols having a longer duration than the switching time slot.

36. Transceiver (150) of one of the claims 20-35, wherein the busy signal transmitter (170) is adapted for transmitting additional feedback information within the busy signal time slots.

37. Method for transceiving, comprising the steps of
receiving a first payload signal in a first predefined payload signal time slot from at least one transceiver;
receiving a second payload signal in a second predefined payload signal time slot from at the least one transceiver;
inserting a switching time slot between receiving a payload signal and transmitting a busy signal;
transmitting a first busy signal in a first predefined busy signal time slot to the at least one transceiver, the first busy signal indicating successful reception of the first payload signal; and
transmitting a second busy signal in a second predefined busy signal time slot to the at least one transceiver, the second busy signal indicating successful reception of the second payload signal;
wherein the first predefined busy signal time slot is arranged in time subsequent to the second predefined payload signal time slot.

38. Computer program having program code for performing the method of claim 37, when the program code runs on a computer.

## Patentansprüche

1. Sende-/Empfangsgerät (100), das folgende Merkmale aufweist:
einen Sender (110) zum Senden eines ersten Nutzsignals in einem ersten vordefinierten Nutzsignal-Zeitschlitz und anschließend eines zweiten Nutzsignals in einem zweiten vordefinierten Nutzsignal-Zeitschlitz an zumindest ein anderes Sende-/Empfangsgerät; und
einen Belegtsignal-Empfänger (120) zum Empfangen eines ersten Belegtsignals in einem ersten vordefinierten Belegtsignal-Zeitschlitz und eines zweiten Belegtsignals in einem zweiten vordefinierten Belegtsignal-Zeitschlitz von dem zumindest einen anderen Sende-/Empfangsgerät, wobei das erste Belegtsignal einen erfolgreichen Empfang des ersten Nutzsignals angibt und das zweite Belegtsignal einen erfolgreichen Empfang des zweiten Nutzsignals angibt;
wobei das Sende-/Empfangsgerät (100) dahin gehend angepasst ist, zwischen das Senden eines Nutzsignals und das Empfangen eines Belegtsignals einen Umschaltzeitschlitz einzufügen, und wobei der erste vordefinierte Belegtsignal-Zeitschlitz zeitlich anschließend an den zweiten vordefinierten Nutzsignal-Zeitschlitz angeordnet ist.

2. Sende-/Empfangsgerät (100) gemäß Anspruch 1, bei dem der erste vordefinierte Nutzsignal-Zeitschlitz einem ersten vordefinierten Aufwärtsstrecke-Nutzsignal-Zeitschlitz entspricht und der zweite vordefinierte Nutzsignal-Zeitschlitz einem zweiten vordefinierten Aufwärtsstrecke-Nutzsignal-Zeitschlitz entspricht, und bei dem der Sender (110) ferner dahin gehend angepasst ist, Abwärtsstrecke-Belegtsignale in vordefinierten Abwärtsstrecke-Belegtsignal-Zeitschlitzen zu senden, und bei dem der erste vordefinierte Belegtsignal-Zeitschlitz einem ersten vordefinierten Aufwärtsstrecke-Belegtsignal-Zeitschlitz entspricht und der zweite vordefinierte Belegtsignal-Zeitschlitz einem zweiten vordefinierten Aufwärtsstrecke-Belegtsignal-Zeitschlitz entspricht, und bei dem der Belegtsignal-Empfänger (120) ferner dahin gehend angepasst ist, Abwärtsstrecke-Nutzsignale in vordefinierten Abwärtsstrecke-Nutzsignal-Zeitschlitzen zu empfangen.

3. Sende-/Empfangsgerät (100) gemäß Anspruch 2, bei dem der erste und der zweite vordefinierte Aufwärtsstrecke-Nutzsignal-Zeitschlitz und der vordefinierte Abwärtsstrecke-Nutzsignal-Zeitschlitz zeitlich ohne einen dazwischenliegenden Umschaltzeitschlitz angeordnet sind.

4. Sende-/Empfangsgerät (100) gemäß einem der Ansprüche 2 oder 3, bei dem der erste und der zweite vordefinierte Aufwärtsstrecke-Belegtsignal-Zeitschlitz und der vordefinierte Abwärtsstrecke-Belegtsignal-Zeitschlitz zeitlich ohne einen dazwischenliegenden Umschaltzeitschlitz angeordnet sind.

5. Sende-/Empfangsgerät (100) gemäß einem der Ansprüche 1 bis 4, das ferner einen Schalter zum Umschalten eines Antennenpfades zwischen dem Sender (110) und dem Belegtsignal-Empfänger (120) innerhalb des Umschaltzeitschlitzes umfasst, wobei der Antennenpfad eine Verbindung mit einer oder mehreren Antennen ist.

6. Sende-/Empfangsgerät (100) gemäß einem der Ansprüche 1 bis 5, bei dem der Sender (110) dahin gehend angepasst ist, OFDM-Signale zu senden, und der Belegtsignal-Empfänger (120) dahin gehend angepasst ist, OFDM-Signale zu empfangen.

7. Sende-/Empfangsgerät (100) gemäß Anspruch 6, bei dem der Sender (110) dahin gehend angepasst ist, OFDM-Signale gemäß den WINNER- oder LTE-Spezifikationen zu senden, und der Belegtsignal-Empfänger (120) dahin gehend angepasst ist, OFDM-Signale gemäß den WINNER- oder LTE-Spezifikationen zu empfangen.

8. Sende-/Empfangsgerät (100) gemäß einem der vorhergehenden Ansprüche, bei dem der Sender (110) dahin gehend angepasst ist, die Nutzsignale zu senden, und der Belegtsignal-Empfänger (120) dahin gehend angepasst ist, die Belegtsignale zu empfangen, die in Senderahmen sequenziert sind, die aus einer Mehrzahl von aufeinanderfolgenden Nutzsignal-Zeitschlitzen und einer Mehrzahl von zugeordneten aufeinanderfolgenden Belegtsignal-Zeitschlitzen gebildet sind.

9. Sende-/Empfangsgerät (100) gemäß einem der vorhergehenden Ansprüche, bei dem der Sender (110) dahin gehend angepasst ist, einen Nutzsignal-Datenblock während eines Nutzsignal-Zeitschlitzes zu senden, wobei ein Nutzsignal-Datenblock ein Zeit/Frequenz-Schlitz ist, der eine Mehrzahl von OFDM-Symbolen auf einer Mehrzahl von Hilfsträgern umfasst.

10. Sende-/Empfangsgerät (100) gemäß Anspruch 9, bei dem der Sender (110) dahin gehend angepasst ist, den Datenblock zu senden, der ein Zeit/Frequenz-Schlitz ist, der vier OFDM-Symbole auf 16 Hilfsträgern umfasst.

11. Sende-/Empfangsgerät (100) gemäß einem der Ansprüche 9 oder 10, bei dem der Sender (110) dahin gehend angepasst ist, 1 - 6 Nutzsignal-Datenblöcke nicht zu senden oder sequentiell zu senden, und bei dem der Belegtsignal-Empfänger (120) dahin gehend angepasst ist, Belegtsignale für die 1 - 6 Nutzsignal-Datenblöcke in einem Belegtsignal-Datenblock nicht zu empfangen oder zu empfangen.

12. Sende-/Empfangsgerät (100) gemäß Anspruch 11, bei dem der Belegtsignal-Empfänger (120) dahin gehend angepasst ist, den Belegtsignal-Datenblock jeden 7. Nutzsignal-Datenblock zu empfangen, wobei der Belegtsignal-Datenblock 6 OFDM-Symbole umfasst, die Informationen über 6 Belegtsignale aufweisen.

13. Sende-/Empfangsgerät (100) gemäß einem der Ansprüche 11 oder 12, bei dem der Belegtsignal-Empfänger (120) dahin gehend angepasst ist, Belegtsignal-Datenblöcke zu empfangen, die Informationen über eine Mehrzahl von Belegtsignalen umfassen, wobei die Informationen über ein Belegtsignal in einer Mehrzahl von OFDM-Symbolen in dem Belegtsignal-Datenblock enthalten sind.

14. Sende-/Empfangsgerät (100) gemäß Anspruch 13, bei dem der Belegtsignal-Empfänger (120) dahin gehend angepasst ist, Belegtsignal-Datenblöcke zu empfangen, bei denen Informationen über ein Belegtsignal in zwei OFDM-Symbolen enthalten sind oder bei denen ein OFDM-Symbol Informationen über mehrere Belegtsignale umfasst.

15. Sende-/Empfangsgerät (100) gemäß einem der Ansprüche 6 bis 14, bei dem der Belegtsignal-Empfänger (120) dahin gehend angepasst ist, einen Belegtsignal-Datenblock zu empfangen, der OFDM-Symbole umfasst, die eine kürzere Dauer aufweisen oder weniger Hilfsträger umfassen als die OFDM-Symbole eines Nutzsignal-Datenblocks.

16. Sende-/Empfangsgerät (100) gemäß einem der Ansprüche 1 bis 15, bei dem der Sender (110) dahin gehend angepasst ist beziehungsweise der Belegtsignal-Empfänger (120) dahin gehend angepasst ist, OFDM-Symbole, die eine kürzere Dauer aufweisen als der Umschaltzeitschlitz, zu senden beziehungsweise zu empfangen.

17. Sende-/Empfangsgerät (100) gemäß einem der vorhergehenden Ansprüche, bei dem der Belegtsignal-Empfänger (120) dahin gehend angepasst ist, zusätzliche Rückkopplungsinformationen innerhalb der Belegtsignal-Zeitschlitze zu empfangen.

18. Verfahren zum Senden und Empfangen, das folgende Schritte aufweist:
Senden eines ersten Nutzsignals in einem ersten vordefinierten Nutzsignal-Zeitschlitz an zumindest ein Sende-/Empfangsgerät;
Senden eines zweiten Nutzsignals in einem zweiten vordefinierten Nutzsignal-Zeitschlitz an das zumindest eine Sende-/Empfangsgerät;
Einfügen eines Umschaltzeitschlitzes zwischen ein Senden eines Nutzsignals und ein Empfangen eines Belegtsignals;
Empfangen eines ersten Belegtsignals in einem ersten vordefinierten Belegtsignal-Zeitschlitz von dem zumindest einen Sende-/Empfangsgerät, wobei das erste Belegtsignal einen erfolgreichen Empfang des ersten Nutzsignals angibt;
Empfangen eines zweiten Belegtsignals in einem zweiten vordefinierten Belegtsignal-Zeitschlitz von dem zumindest einen Sende-/Empfangsgerät, wobei das zweite Belegtsignal einen erfolgreichen Empfang des zweiten Nutzsignals angibt; und
Empfangen des ersten vordefinierten Belegtsignal-Zeitschlitzes anschließend an den zweiten Nutzsignal-Zeitschlitz.

19. Computerprogramm, das einen Programmcode zum Durchführen des Verfahrens gemäß Anspruch 18 aufweist, wenn der Programmcode an einem Computer abläuft.

20. Sende-/Empfangsgerät (150), das folgende Merkmale aufweist:
einen Empfänger (160) zum Empfangen eines ersten Nutzsignals in einem ersten vordefinierten Nutzsignal-Zeitschlitz und eines zweiten Nutzsignals in einem zweiten vordefinierten Nutzsignal-Zeitschlitz von zumindest einem anderen Sende-/Empfangsgerät; und
einen Belegtsignal-Sender (170) zum Senden eines ersten Belegtsignals in einem ersten vordefinierten Belegtsignal-Zeitschlitz und eines zweiten Belegtsignals in einem zweiten vordefinierten Belegtsignal-Zeitschlitz an das zumindest eine andere Sende-/Empfangsgerät, wobei das erste Belegtsignal einen erfolgreichen Empfang des ersten Nutzsignals angibt und das zweite Belegtsignal einen erfolgreichen Empfang des zweiten Nutzsignals angibt;
wobei das Sende-/Empfangsgerät (150) dahin gehend angepasst ist, zwischen das Empfangen eines Nutzsignals und das Senden eines Belegtsignals einen Umschaltzeitschlitz einzufügen, und wobei der erste vordefinierte Belegtsignal-Zeitschlitz zeitlich anschließend an den zweiten vordefinierten Nutzsignal-Zeitschlitz angeordnet ist.

21. Sende-/Empfangsgerät (150) gemäß Anspruch 20, bei dem der erste vordefinierte Nutzsignal-Zeitschlitz einem ersten vordefinierten Abwärtsstrecke-Nutzsignal-Zeitschlitz entspricht und der zweite vordefinierte Nutzsignal-Zeitschlitz einem zweiten vordefinierten Abwärtsstrecke-Nutzsignal-Zeitschlitz entspricht, und bei dem der Empfänger (160) ferner dahin gehend angepasst ist, Aufwärtsstrecke-Belegtsignale in vordefinierten Aufwärtsstrecke-Belegtsignal-Zeitschlitzen zu empfangen, und bei dem der erste vordefinierte Belegtsignal-Zeitschlitz einem ersten vordefinierten Abwärtsstrecke-Belegtsignal-Zeitschlitz entspricht und der zweite vordefinierte Belegtsignal-Zeitschlitz einem zweiten vordefinierten Abwärtsstrecke-Belegtsignal-Zeit-schlitz entspricht, und bei dem der Belegtsignal-Sender (170) ferner dahin gehend angepasst ist, Aufwärtsstrecke-Nutzsignale in vordefinierten Aufwärtsstrecke-Nutzsignal-Zeitschlitzen zu senden.

22. Sende-/Empfangsgerät (150) gemäß Anspruch 21, bei dem der erste und der zweite vordefinierte Abwärtsstrecke-Nutzsignal-Zeitschlitz und der vordefinierte Aufwärtsstrecke-Nutzsignal-Zeitschlitz zeitlich ohne einen dazwischenliegenden Umschaltzeitschlitz angeordnet sind.

23. Sende-/Empfangsgerät (150) gemäß einem der Ansprüche 21 oder 22, bei dem der erste und der zweite vordefinierte Abwärtsstrecke-Belegtsignal-Zeitschlitz und der vordefinierte Aufwärtsstrecke-Belegtsignal-Zeitschlitz zeitlich ohne einen dazwischenliegenden Umschaltzeitschlitz angeordnet sind.

24. Sende-/Empfangsgerät (150) gemäß einem der Ansprüche 20 bis 23, das ferner einen Schalter zum Umschalten eines Antennenpfades zwischen dem Empfänger (160) und dem Belegtsignal-Sender (170) innerhalb des Umschaltzeitschlitzes umfasst, wobei der Antennenpfad eine Verbindung mit einer oder mehreren Antennen ist.

25. Sende-/Empfangsgerät (150) gemäß einem der Ansprüche 20 bis 24, bei dem der Empfänger (160) dahin gehend angepasst ist, OFDM-Signale zu empfangen, und der Belegtsignal-Sender (170) dahin gehend angepasst ist, OFDM-Signale zu senden.

26. Sende-/Empfangsgerät (150) gemäß Anspruch 25, bei dem der Empfänger (160) dahin gehend angepasst ist, OFDM-Signale gemäß den WINNER- oder LTE-Spezifikationen zu empfangen, und der Belegtsignal-Sender (170) dahin gehend angepasst ist, OFDM-Signale gemäß den WINNER- oder LTE-Spezifikationen zu senden.

27. Sende-/Empfangsgerät (150) gemäß einem der Ansprüche 20 bis 26, bei dem der Empfänger (160) dahin gehend angepasst ist, die Nutzsignale zu empfangen, und der Belegtsignal-Sender (120) dahin gehend angepasst ist, die Belegtsignale zu senden, die in Senderahmen sequenziert sind, die aus einer Mehrzahl von aufeinanderfolgenden Nutzsignal-Zeitschlitzen und einer Mehrzahl von zugeordneten aufeinanderfolgenden Belegtsignal-Zeitschlitzen gebildet sind.

28. Sende-/Empfangsgerät (150) gemäß einem der Ansprüche 20 bis 27, bei dem der Empfänger (160) dahin gehend angepasst ist, einen Nutzsignal-Datenblock während eines Nutzsignal-Zeitschlitzes zu empfangen, wobei ein Nutzsignal-Datenblock ein Zeit/Frequenz-Schlitz ist, der eine Mehrzahl von OFDM-Symbolen auf einer Mehrzahl von Hilfsträgern umfasst.

29. Sende-/Empfangsgerät (150) gemäß Anspruch 28, bei dem der Empfänger (160) dahin gehend angepasst ist, den Nutzdsignal-Datenblock zu empfangen, der ein Zeit/Frequenz-Schlitz ist, der vier OFDM-Symbole auf 16 Hilfsträgern umfasst.

30. Sende-/Empfangsgerät (150) gemäß einem der Ansprüche 28 oder 29, bei dem der Empfänger (160) dahin gehend angepasst ist, 1 - 6 Nutzsignal-Datenblöcke nicht zu senden oder sequentiell zu empfangen, und bei dem der Belegtsignal-Sender (170) dahin gehend angepasst ist, Belegtsignale für die 1 - 6 Nutzsignal-Datenblöcke in einem Belegtsignal-Datenblock nicht zu senden oder zu senden.

31. Sende-/Empfangsgerät (150) gemäß Anspruch 30, bei dem der Belegtsignal-Sender (170) dahin gehend angepasst ist, den Belegtsignal-Datenblock jeden 7. Nutzsignal-Datenblock zu senden, wobei der Belegtsignal-Datenblock 6 OFDM-Symbole umfasst, die Informationen über 6 Belegtsignale aufweisen.

32. Sende-/Empfangsgerät (150) gemäß einem der Ansprüche 30 oder 31, bei dem der Belegtsignal-Sender (170) dahin gehend angepasst ist, einen Belegtsignal-Datenblock zu senden, die Informationen über eine Mehrzahl von Belegtsignalen umfassen, wobei die Informationen über ein Belegtsignal in einer Mehrzahl von OFDM-Symbolen in dem Belegtsignal-Datenblock enthalten sind.

33. Sende-/Empfangsgerät (150) gemäß Anspruch 32, bei dem der Belegtsignal-Sender (170) dahin gehend angepasst ist, einen Belegtsignal-Datenblock zu senden, bei dem Informationen über ein Belegtsignal in zwei OFDM-Symbolen enthalten sind.

34. Sende-/Empfangsgerät (150) gemäß einem der Ansprüche 21 bis 33, bei dem der Belegtsignal-Sender (170) dahin gehend angepasst ist, einen Belegtsignal-Datenblock zu senden, der OFDM-Symbole umfasst, die eine kürzere Dauer aufweisen oder weniger Hilfsträger umfassen als die OFDM-Symbole eines Nutzsignal-Datenblocks.

35. Sende-/Empfangsgerät (150) gemäß einem der Ansprüche 20 bis 34, bei dem der Empfänger (160) dahin gehend angepasst ist beziehungsweise der Belegtsignal-Sender (170) dahin gehend angepasst ist, OFDM-Symbole, die eine kürzere Dauer aufweisen als der Umschaltzeitschlitz, zu empfangen beziehungsweise zu senden.

36. Sende-/Empfangsgerät (150) gemäß einem der Ansprüche 20 bis 35, bei dem der Belegtsignal-Sender (170) dahin gehend angepasst ist, zusätzliche Rückkopplungsinformationen innerhalb der Belegtsignal-Zeitschlitze zu senden.

37. Verfahren zum Senden und Empfangen, das folgende Schritte aufweist:
Empfangen eines ersten Nutzsignals in einem ersten vordefinierten Nutzsignal-Zeitschlitz von zumindest einem Sende-/Empfangsgerät;
Empfangen eines zweiten Nutzsignals in einem zweiten vordefinierten Nutzsignal-Zeitschlitz von dem zumindest einen Sende-/Empfangsgerät;
Einfügen eines Umschaltzeitschlitzes zwischen ein Empfangen eines Nutzsignals und ein Senden eines Belegtsignals;
Senden eines ersten Belegtsignals in einem ersten vordefinierten Belegtsignal-Zeitschlitz an das zumindest eine Sende-/Empfangsgerät, wobei das erste Belegtsignal einen erfolgreichen Empfang des ersten Nutzsignals angibt;
Senden eines zweiten Belegtsignals in einem zweiten vordefinierten Belegtsignal-Zeitschlitz an das zumindest eine Sende-/Empfangsgerät, wobei das zweite Belegtsignal einen erfolgreichen Empfang des zweiten Nutzsignals angibt; und
Senden des ersten vordefinierten Belegtsignal-Zeitschlitzes anschließend an den zweiten Nutzsignal-Zeitschlitz;
wobei der erste vordefinierte Belegtsignal-Zeitschlitz zeitlich anschließend an den zweiten vordefinierten Nutzsignal-Zeitschlitz angeordnet ist.

38. Computerprogramm, das einen Programmcode zum Durchführen des Verfahrens gemäß Anspruch 37 aufweist, wenn der Programmcode an einem Computer abläuft.

## Revendications

1. Emetteur-récepteur (100) comprenant
un émetteur (110) destiné à émettre un premier signal de charge utile dans une première fenêtre de temps de signal de charge utile prédéfinie et, ensuite, un deuxième signal de charge utile dans une deuxième fenêtre de temps de signal de charge utile prédéfinie vers au moins un autre émetteur-récepteur; et
un récepteur de signal occupé (120) destiné à recevoir un premier signal occupé dans une première fenêtre de temps de signal occupé prédéfinie et un deuxième signal occupé dans une deuxième fenêtre de temps de signal occupé prédéfinie de l'au moins un autre émetteur-récepteur, le premier signal occupé indiquant la réception fructueuse du premier signal de charge utile et le deuxième signal occupé indiquant la réception fructueuse du deuxième signal de charge utile;
dans lequel l'émetteur-récepteur (100) est adapté pour insérer une fenêtre de temps de commutation entre la transmission d'un signal de charge utile et la réception d'un signal occupé et dans lequel la fenêtre de temps de signal occupé prédéfinie est disposée dans le temps à la suite de la deuxième fenêtre de temps de signal de charge utile prédéfinie.

2. Emetteur-récepteur (100) selon la revendication 1, dans lequel la première fenêtre de temps de signal de charge utile prédéfinie correspond à une première fenêtre de temps de signal de signal de charge utile de liaison ascendante prédéfinie et la deuxième fenêtre de temps de signal de charge utile prédéfinie correspond à une deuxième fenêtre de temps de signal de charge utile de liaison ascendante prédéfinie et dans lequel l'émetteur-récepteur (110) est, par ailleurs, adapté pour transmettre des signaux occupé de liaison descendante dans des fenêtres de temps de signal occupé de liaison ascendante prédéfinies et dans lequel la première fenêtre de temps de signal occupé prédéfinie correspond à une première fenêtre de temps de signal occupé de liaison ascendante prédéfinie et la deuxième fenêtre de temps de signal occupé prédéfinie correspond à une deuxième fenêtre de temps de signal occupé de liaison ascendante prédéfinie et dans lequel l'émetteur-récepteur de signal occupé (120) est, par ailleurs, adapté pour recevoir des signaux de charge utile de liaison descendante dans des fenêtres de temps de signal de charge utile de liaison descendante prédéfinies.

3. Emetteur-récepteur (100) selon la revendication 2, dans lequel les première et deuxième fenêtres de temps de signal de charge utile de liaison ascendante prédéfinies et la fenêtre de temps de signal occupé de liaison descendante prédéfinie sont disposées dans le temps sans fenêtre de temps de commutation entre elles.

4. Emetteur-récepteur (100) selon l'une des revendications 2 ou 3, dans lequel les première et deuxième fenêtres de temps de signal occupé de liaison ascendante prédéfinie et la fenêtre de temps de signal de charge utile descendante prédéfinie sont disposées dans le temps sans fenêtre de temps de commutation entre elles.

5. Emetteur-récepteur (100) selon l'une des revendications 1 à 4, comprenant par ailleurs un commutateur destiné à commuter un trajet d'antenne entre l'émetteur (110) et le récepteur de signal occupé (120) dans la fenêtre de temps de commutation, le trajet d'antenne étant une connexion à une ou plusieurs antennes.

6. Emetteur-récepteur (100) selon l'une des revendications 1 à 5, dans lequel l'émetteur (110) est adapté pour émettre et le récepteur de signal occupé (120) est adapté pour recevoir des signaux OFDM.

7. Emetteur-récepteur (100) selon la revendication 7, dans lequel l'émetteur (110) est adapté pour émettre et le récepteur de signal occupé (120) est adapté pour recevoir des signaux OFDM selon les spécifications WINNER ou LTE.

8. Emetteur-récepteur (100) selon l'une des revendications précédentes, dans lequel l'émetteur (110) est adapté pour émettre les signaux de charge utile et le récepteur de signal occupé (120) est adapté pour recevoir les signaux occupé séquencés dans des trames de radiodiffusion composées d'une pluralité de fenêtres de temps de signal de charge utile consécutives et d'une pluralité de fenêtres de temps de signal occupé consécutives associées.

9. Emetteur-récepteur (100) selon l'une des revendications précédentes, dans lequel l'émetteur (110) est adapté pour émettre un groupe de données de signal de charge utile pendant une fenêtre de temps de signal de charge utile, un groupe de données de signal de charge utile étant une fenêtre de temps-fréquence comprenant une pluralité de symboles OFDM sur une pluralité de sous-porteuses.

10. Emetteur-récepteur (100) selon la revendication 9, dans lequel l'émetteur (110) est adapté pour émettre le groupe de données qui est une fenêtre de temps-fréquence comprenant quatre symboles OFDM sur 16 sous-porteuses.

11. Emetteur-récepteur (100) selon l'une des revendications 9 ou 10, dans lequel l'émetteur (110) est adapté pour ne pas émettre ou pour émettre en séquence 1 à 6 groupes de données de signal de charge utile et dans lequel le récepteur de signal occupé (120) est adapté pour ne pas recevoir ou pour recevoir des signaux occupé pour les 1 à 6 groupes de données de signal de charge utile dans un groupe de données de signal occupé.

12. Emetteur-récepteur (100) selon la revendication 11, dans lequel le récepteur de signal occupé (120) est adapté pour recevoir le groupe de données de signal occupé tous les 7 groupes de données de signal de charge utile, le groupe de données de signal occupé comprenant 6 symboles OFDM présentant des informations sur 6 signaux occupé.

13. Emetteur-récepteur (100) selon l'une des revendications 11 ou 12, dans lequel le récepteur de signal occupé (120) est adapté pour recevoir des groupes de données de signal occupé comprenant des informations sur une pluralité de signaux occupé, les informations sur un signal occupé étant comprises dans une pluralité de symboles OFDM dans le groupe de données de signal occupé.

14. Emetteur-récepteur (100) selon la revendication 13, dans lequel le récepteur de signal occupé (120) est adapté pour recevoir des groupes de données de signal occupé dans lesquels les informations sur un signal occupé sont comprises dans deux symboles OFDM ou dans lesquels un symbole OFDM comprend des informations sur de multiples signaux occupé.

15. Emetteur-récepteur (100) selon l'une des revendications 6 à 14, dans lequel le récepteur de signal occupé (120) est adapté pour recevoir un groupes de données de signal occupé comprenant des symboles OFDM qui sont d'une durée plus courte ou qui comprennent moins de sous-porteuses que les symboles OFDM d'un groupe de données de signal de charge utile.

16. Emetteur-récepteur (100) selon l'une des revendications 1 à 15, dans lequel l'émetteur (110) est adapté pour émettre ou le récepteur de signal occupé (120) est adapté pour recevoir des symboles OFDM ayant une durée plus longue que la fenêtre de temps de commutation.

17. Emetteur-récepteur (100) selon l'une des revendications précédentes, dans lequel le récepteur de signal occupé (120) est adapté pour recevoir des informations de rétroaction additionnelles dans les fenêtres de temps de signal occupé.

18. Procédé pour émettre et recevoir, comprenant les étapes consistant à
émettre un premier signal de charge utile dans une première fenêtre de temps de signal de charge utile prédéfinie vers au moins un émetteur-récepteur;
émettre un deuxième signal de charge utile dans une deuxième fenêtre de temps de signal de charge utile prédéfinie vers l'au moins un émetteur-récepteur;
insérer une fenêtre de temps de commutation entre l'émission d'un signal de charge utile et la réception d'un signal occupé;
recevoir un premier signal occupé dans une première fenêtre de temps de signal occupé prédéfinie de l'au moins un émetteur-récepteur, le premier signal occupé indiquant la réception fructueuse du premier signal de charge utile;
recevoir un deuxième signal occupé dans une deuxième fenêtre de temps de signal occupé prédéfinie de l'au moins un émetteur-récepteur, le deuxième signal occupé indiquant la réception fructueuse du deuxième signal de charge utile; et
recevoir la première fenêtre de temps de signal occupé prédéfinie à la suite de la deuxième fenêtre de temps de signal de charge utile.

19. Programme d'ordinateur ayant un code de programme pour réaliser le procédé selon la revendication 18 lorsque le code de programme est exécuté sur un ordinateur.

20. Emetteur-récepteur (150) comprenant
un récepteur (160) destiné à recevoir un premier signal de charge utile dans une première fenêtre de temps de signal de charge utile prédéfinie et un deuxième signal de charge utile dans une deuxième fenêtre de temps de signal de charge utile prédéfinie de l'au moins un autre émetteur-récepteur; et
un émetteur de signal occupé (170) destiné à émettre un premier signal occupé dans une première fenêtre de temps de signal occupé prédéfinie et un deuxième signal occupé dans une deuxième fenêtre de temps de signal occupé prédéfinie vers l'au moins un autre émetteur-récepteur, le premier signal occupé indiquant la réception fructueuse du premier signal de charge utile et le deuxième signal occupé indiquant la réception fructueuse du deuxième signal de charge utile;
dans lequel l'émetteur-récepteur (150) est adapté pour insérer une fenêtre de temps de commutation entre la réception d'un signal de charge utile et l'émission d'un signal occupé et dans lequel la première fenêtre de temps de signal occupé prédéfinie est disposée dans le temps à la suite de la deuxième fenêtre de temps de signal de charge utile prédéfinie.

21. Emetteur-récepteur (150) selon la revendication 20, dans lequel première fenêtre de temps de signal de charge utile prédéfinie correspond à une première fenêtre de temps de signal occupé de liaison descendante prédéfinie et la deuxième fenêtre de temps de signal de charge utile prédéfinie correspond à une deuxième fenêtre de temps de signal occupé de liaison descendante prédéfinie et dans lequel le récepteur (160) est par ailleurs adapté pour recevoir des signaux occupé de liaison ascendante dans des fenêtres de temps de signal occupé de liaison ascendante prédéfinie et dans lequel la première fenêtre de temps de signal occupé prédéfinie correspond à une première fenêtre de temps de signal occupé de liaison descendante prédéfinie et la deuxième fenêtre de temps de signal occupé prédéfinie correspond à une deuxième fenêtre de temps de signal occupé de liaison descendante prédéfinie et dans lequel l'émetteur de signal occupé (170) est par ailleurs adapté pour émettre des signaux de charge utile de liaison ascendante dans des fenêtres de temps de signal de charge utile de liaison ascendante prédéfinies.

22. Emetteur-récepteur (150) selon la revendication 21, dans lequel les première et deuxième fenêtres de temps de signal de charge utile de liaison descendante prédéfinies et la fenêtre de temps de signal occupé de liaison ascendante prédéfinie sont disposées dans le temps sans fenêtre de temps de commutation entre elles.

23. Emetteur-récepteur (150) selon l'une des revendications 21 ou 22, dans lequel les première et deuxième fenêtres de temps de signal occupé de liaison descendante prédéfinies et la fenêtre de temps de signal de charge utile de liaison ascendante prédéfinie sont disposées dans le temps sans fenêtre de temps de commutation entre elles.

24. Emetteur-récepteur (150) selon l'une des revendications 20 à 23, comprenant par ailleurs un commutateur destiné à commuter un trajet d'antenne entre le récepteur (160) et l'émetteur de signal occupé (170) dans la fenêtre de temps de commutation, le trajet d'antenne étant une connexion à une ou plusieurs antennes.

25. Emetteur-récepteur (150) selon l'une des revendications 20 à 24, dans lequel récepteur (160) est adapté pour recevoir et l'émetteur de signal occupé (170) est adapté pour émettre des signaux OFDM.

26. Emetteur-récepteur (150) selon la revendication 25, dans lequel récepteur (160) est adapté pour recevoir et l'émetteur de signal occupé (170) est adapté pour émettre des signaux OFDM selon les spécifications WINNER ou LTE.

27. Emetteur-récepteur (150) selon l'une des revendications 20 à 26, dans lequel récepteur (160) est adapté pour recevoir les signaux de charge utile et l'émetteur de signal occupé (170) est adapté pour émettre les signaux occupé séquencés dans des trames de radiodiffusion composées d'une pluralité de fenêtres de temps de signal de charge utile consécutives et d'une pluralité de fenêtres de temps de signal occupé consécutives associées.

28. Emetteur-récepteur (150) selon l'une des revendications 20 à 27, dans lequel récepteur (160) est adapté pour recevoir un groupe de données de signal de charge utile pendant une fenêtre de temps de signal de charge utile, un groupe de données de signal de charge utile étant une fenêtre de temps-fréquence comprenant une pluralité de symboles OFDM sur une pluralité de sous-porteuses.

29. Emetteur-récepteur (150) selon la revendication 28, dans lequel le récepteur (160) est adapté pour recevoir le groupe de données de signal de charge utile qui est une fenêtre de temps-fréquence comprenant quatre symboles OFDM sur 16 sous-porteuses.

30. Emetteur-récepteur (150) selon l'une des revendications 28 ou 29, dans lequel le récepteur (160) est adapté pour ne pas recevoir ou pour recevoir en séquence 1 à 6 groupes de données de signal de charge utile et dans lequel l'émetteur de signal occupé (170) est adapté pour ne pas émettre ou pour émettre des signaux occupé pour 1 à 6 groupes de données de signal de charge utile dans un groupe de données de signal occupé.

31. Emetteur-récepteur (150) selon la revendication 30, dans lequel l'émetteur de signal occupé (170) est adapté pour émettre un groupe de données de signal occupé tous les 7 groupes de données de signal de charge utile, le groupe de données de signal occupé comprenant 6 symboles OFDM présentant des informations sur 6 signaux occupé.

32. Emetteur-récepteur (150) selon l'une des revendications 30 ou 31, dans lequel l'émetteur de signal occupé (170) est adapté pour émettre un groupe de données de signal occupé comprenant des informations sur une pluralité de signaux occupé, les informations sur un signal occupé étant comprises dans une pluralité de symboles OFDM dans le groupe de données de signal occupé.

33. Emetteur-récepteur (150) selon la revendication 32, dans lequel l'émetteur de signal occupé (170) est adapté pour émettre un groupe de données de signal occupé dans lequel les informations sur un signal occupé sont comprises dans 2 symboles OFDM.

34. Emetteur-récepteur (150) selon l'une des revendications 21 à 33, dans lequel l'émetteur de signal occupé (170) est adapté pour émettre un groupe de données de signal occupé comprenant des symboles OFDM de durée plus courte ou comprenant moins de sous-porteuses que les symboles OFDM des groupes de données de signal de charge utile.

35. Emetteur-récepteur (150) selon l'une des revendications 20 à 34, dans lequel récepteur (160) est adapté pour recevoir ou l'émetteur de signal occupé (170) est adapté pour émettre des symboles OFDM d'une durée plus longue que la fenêtre de temps de commutation.

36. Emetteur-récepteur (150) selon l'une des revendications 20 à 35, dans lequel l'émetteur de signal occupé (170) est adapté pour émettre des informations de rétroaction additionnelles dans la fenêtre de temps de signal occupé.

37. Procédé pour émettre et recevoir, comprenant les étapes consistant à
recevoir un premier signal de charge utile dans une première fenêtre de temps de signal de charge utile prédéfinie de l'au moins un émetteur-récepteur;
recevoir un deuxième signal de charge utile dans une deuxième fenêtre de temps de signal de charge utile prédéfinie de l'au moins un émetteur-récepteur;
insérer une fenêtre de temps de commutation entre la réception d'un signal de charge utile et l'émission d'un signal occupé;
émettre un premier signal occupé dans une première fenêtre de temps de signal occupé prédéfinie à l'au moins un émetteur-récepteur, le premier signal occupé indiquant la réception fructueuse du premier signal de charge utile; et
émettre un deuxième signal occupé dans une deuxième fenêtre de temps de signal occupé prédéfinie à l'au moins un émetteur-récepteur, le deuxième signal occupé indiquant la réception fructueuse du deuxième signal de charge utile;
dans lequel la première fenêtre de temps de signal occupé prédéfinie est disposée dans le temps à la suite de la deuxième fenêtre de temps de signal de charge utile prédéfinie.

38. Programme d'ordinateur ayant un code de programme pour réaliser le procédé selon la revendication 37 lorsque le code de programme est exécuté sur un ordinateur.
